# EUROPEAN PATENT SPECIFICATION

(11) **EP 2 724 990 B1**
(45) Date of publication and mention of the grant of the patent: **09.08.2017**
(21) Application number: 12802061.7
(22) Date of filing: 19.06.2012
(51) Int. Cl.: C02F 11/04, C02F 3/28, C02F 11/12, C02F 11/14, C02F 1/38, C02F 1/52, C02F 101/10, C02F 101/32, C05F 17/00, C02F 1/66

(54) **METHOD AND APPARATUS FOR TREATING ORGANIC WASTE WATER AND ORGANIC SLUDGE**
VERFAHREN UND VORRICHTUNG ZUR BEHANDLUNG VON ORGANISCHEM ABWASSER UND KLÄRSCHLAMM
PROCÉDÉ ET APPAREIL DE TRAITEMENT D'EAUX USÉES ORGANIQUES ET DE BOUE ORGANIQUE

(30) Priority: 21.06.2011 JP 2011137339
(43) Date of publication of application: 30.04.2014
(73) Proprietor: Swing Corporation, Tokyo 144-8610 (JP)
(72) Inventor: HAGINO, Takao, Tokyo 144-8610 (JP); SHIMAMURA, Kazuaki, Tokyo 144-8610 (JP); MORITA, Tomoyuki, Tokyo 144-8610 (JP); SATO, Junichi, Tokyo 144-8610 (JP); KOGA, Daisuke, Tokyo 144-8610 (JP); KUROSAWA, Tateki, Tokyo 144-8610 (JP)
(74) Representative: Wimmer, Hubert
(86) International application number: PCT/JP2012/065581
(87) International publication number: WO 2012/176753

(56) References cited:
- WO-A1-03/086990
- WO-A1-03/086990
- JP-A- 2000 061 473
- JP-A- 2002 045 889
- JP-A- 2003 334 584
- JP-A- 2011 050 803

## Description

### TECHNICAL FIELD

The present invention relates to a method and an apparatus for treating waste water containing organic matter (referred to as "organic waste water") and sludge containing organic matter (referred to as "organic sludge"). Specifically, it relates to a method and an apparatus for treating organic waste water and organic sludge including separating and recovering a phosphorous component as magnesium ammonium phosphate (hereinbelow, also referred to as "MAP") from organic waste water such as waste water discharged from sewage water treatment facilities or various waste water treatment facilities, or anaerobically treated sludge obtained by anaerobic treatment of the organic waste water.

### BACKGROUND ART

As a method for separating a nitrogen component and a phosphorus component from organic waste water, a method including adding magnesium ions or the like to organic waste water, growing crystals of magnesium ammonium phosphate (hereinbelow, referred to as "MAP") by reacting phosphorus contained in waste water, ammonia, and magnesium ions, and separating and recovering them as MAP particles is known (referred to as "MAP treatment method").

Since the phosphorus component can be stably recovered and recovered MAP has an added value as good fertilizer, the MAP treatment method is an excellent technique for recovery and removal of phosphorus and nitrogen, also from the viewpoint of effective utilization of resources.

With regard to the MAP treatment method, an apparatus for sludge treatment including a first coagulation means for adding a cationic organic polymer coagulation agent (that is, cationic polymer) to sludge, a gravity concentration means for concentrating the coagulated sludge obtained by the first coagulation means, a second coagulation means for adding an inorganic coagulation agent to concentrated sludge yielded by the gravity concentration means, a third coagulation means for adding an amphoteric organic polymer coagulation agent (that is, amphoteric polymer) to the coagulated sludge obtained by the second coagulation means, a dewatering means for dewatering treatment of the coagulated sludge obtained by the third coagulation means, and a MAP production means for treating water separated by the gravity concentration means is disclosed in Patent Document 1.

Further, in Patent Document 2, a method including separating MAP particles generated in sludge in an anaerobic digestion step for anaerobic treatment of organic waste water using a liquid cyclone or the like to obtain MAP-separated and concentrated liquid containing the MAP particles, adding newly magnesium ions to the MAP-separated and concentrated liquid, recovering them as MAP particles by accumulating fresh MAP on a surface of MAP particles that are present in the MAP-separated and concentrated liquid based on the reaction with dissolved phosphorus component, and discharging MAP depleted sludge after MAP particle recovery as a dewatered cake is disclosed.

The document WO 03/086990 A1 to EBARA CORP. discloses an other typical method for treating organic wastewater.

### CITATION LIST

### PATENT DOCUMENT

Patent Document 1: JP 11-28500 A
Patent Document 2: JP 2004-160304 A

### DISCLOSURE OF THE INVENTION

### PROBLEM TO BE SOLVED BY THE INVENTION

According to the method suggested in Patent Document 2, a phosphorus recovery ratio can be increased as the dissolved phosphorus component is also recovered as MAP.

However, since the MAP particles separable by a physical means such as a liquid cyclone are the MAP particles with a relatively large particle size, fine MAP particles with particle diameter of less than 25 µm (also referred to as "fine MAP particles"), for example, are not separated but remained in sludge and then discarded as it is contained in a dewatered cake, yielding a problem of lower phosphorus recovery ratio. In particular, for a case in which the phosphorus component derived from fine MAP particles is present in an amount of at least 5% by mass in sludge as a treatment subject, there was a significant drop in phosphorus recovery ratio.

Accordingly, the present invention is to provide a new method and apparatus for treating organic waste water and organic sludge which makes it possible to recover fine MAP particles that cannot be separated by a physical means such as a liquid cyclone so as to further improve a phosphorus recovery ratio from sludge.

### MEANS FOR SOLVING PROBLEM

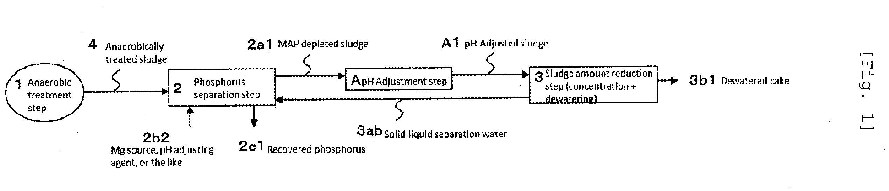

The present invention provides to a method for treating organic waste water or organic sludge including a phosphorus separation step in which by using MAP particles contained in anaerobically treated sludge obtained by anaerobically treating organic waste water or organic sludge as seed crystals, the MAP particles are grown by crystallizing and precipitating, as MAP, a phosphorus component dissolved in solid-liquid separation water returned from the subsequent sludge amount reduction step, followed by separation into the grown MAP particles and MAP depleted sludge, a pH adjustment step in which pH of the MAP depleted sludge obtained by the separation in the phosphorus separation step is lowered to dissolve the MAP particles remaining in the MAP depleted sludge, thereby obtaining pH-adjusted sludge, and a sludge amount reduction step in which dewatered cake is obtained by concentrating and dewatering the pH-adjusted sludge and a part or the whole of solid-liquid separation water obtained by the concentration and dewatering is returned to the phosphorus separation step (see, Fig.1).

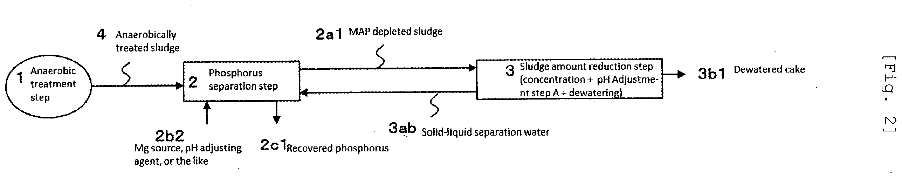

The present invention also provides a method for treating organic waste water or organic sludge including a phosphorus separation step in which by using MAP particles contained in anaerobically treated sludge obtained by anaerobically treating organic waste water or organic sludge as seed crystals, the MAP particles are grown by crystallizing and precipitating, as MAP, a phosphorus component dissolved in solid-liquid separation water returned from the subsequent sludge amount reduction step, followed by separation into the grown MAP particles and MAP depleted sludge, and a sludge amount reduction step in which the MAP depleted sludge separated from the aforementioned step is concentrated and the pH of the concentrated sludge is decreased to dissolve the MAP particles remaining in the concentrated sludge, thereby obtaining pH-adjusted sludge, dewatered cake is obtained by dewatering the pH-adjusted sludge, and a part or the whole of solid-liquid separation water obtained by the dewatering is returned to the phosphorus separation step (see, Fig. 2).

### EFFECT OF THE INVENTION

In anaerobically treated sludge obtained by anaerobic treatment of organic waste water or organic sludge, fine MAP particles not separable by a physical means such as a liquid cyclone are contained as described above. According to the present invention, however, pH of sludge containing fine MAP particles is lowered to dissolve the fine MAP particles so that they can be returned to the phosphorus separation step, and during the phosphorus separation step, the MAP particles are grown by crystallizing and precipitating, as MAP, a MAP substrate component such as a dissolved phosphorus component by using the MAP particles contained in the sludge as seed crystal so that they can be separated and isolated by a physical means such as a liquid cyclone, and thus the recovery ratio of phosphorus, which can be recovered as MAP particles, can be further increased.

### BRIEF DESCRIPTION OF DRAWINGS

Fig. 1 is a drawing for illustrating an example of the basic flow of the present invention;
Fig. 2 is a drawing for illustrating another example of the basic flow of the present invention;
Fig. 3 is a drawing for explaining an example of the specific embodiment of the basic flow illustrated in Fig. 1;
Fig. 4 is a drawing for illustrating an example of the specific embodiment of the basic flow illustrated in Fig. 2;
Fig. 5 is a drawing for illustrating another example of the specific embodiment of the basic flow illustrated in Fig. 1;
Fig. 6 is a drawing for illustrating another example of the specific embodiment of the basic flow illustrated in Fig. 2; and

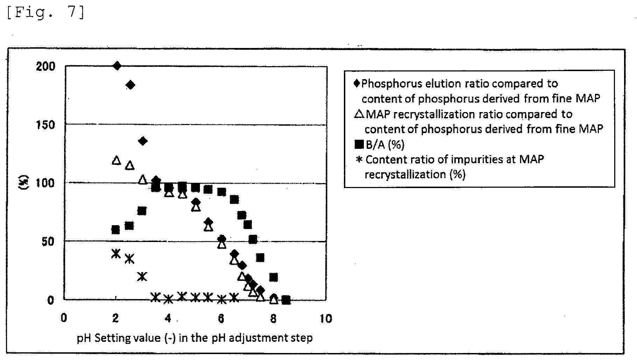

Fig. 7 is a graph illustrating the relation among the setting pH value for the pH adjustment step, phosphorus elution ratio (A), MAP recrystallization ratio (B), B/A, and impurity content ratio in the flow of Fig. 3.

### BEST MODE(S) FOR CARRYING OUT THE INVENTION

### <Present treatment method I>

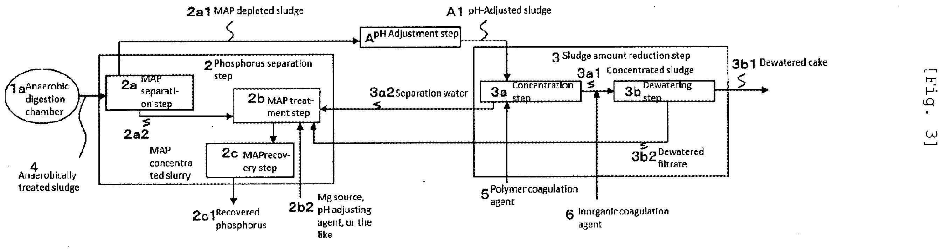

As an example for carrying out the present invention, the method for treating organic waste water or organic sludge illustrated in Fig. 3 will be described (hereinbelow, referred to as "present treatment method I").

The present treatment method I is a method for treating organic waste water or organic sludge including, as illustrated in Fig. 3, "the anaerobic treatment step 1" in which organic waste water or organic sludge is subjected to an anaerobic treatment, "the phosphorus separation step 2" in which the MAP concentrated slurry 2a2 containing crude MAP particles and the MAP depleted sludge 2a1 are separated from the anaerobically treated sludge 4 obtained from the anaerobic treatment step 1, the MAP depleted sludge 2a1 is supplied to the subsequent pH adjustment step A and the MAP concentrated slurry 2a2 is admixed with the solid-liquid separation water 3ab, which is returned from the sludge amount reduction step 3 to be described below, and if necessary, added with Mg source or the pH adjusting agent 2b2, and by using the crude MAP particles contained in the MAP concentrated slurry 2a2 as seed crystals, the MAP particles are grown by crystallizing and precipitating, as MAP, a phosphorus component dissolved in the solid-liquid separation water 3ab followed by recovering the grown MAP particles, "the pH adjustment step A" in which the pH of the MAP depleted sludge 2a1 is lowered by adding an acid to dissolve the MAP particles remaining in the MAP depleted sludge 2a1, thereby obtaining pH-adjusted sludge, and "the sludge amount reduction step 3" in which the dewatered cake 3b1 and the solid-liquid separation water 3ab are separated by concentrating and dewatering the pH-adjusted sludge A1, the dewatered cake 3b1 is discharged, and the solid-liquid separation water 3ab is returned to the phosphorus separation step 2.

Hereinbelow, each step will be described in detail.

### (Organic waste water or organic sludge)

Examples of the organic waste water or organic sludge treated by the present treatment method I include organic waste water or organic sludge discharged from sewage water treatment facilities or various waste water treatment facilities. Examples thereof include waste water containing an organic matter, phosphorus, and nitrogen at high concentration such as digested and depleted liquid of excretions or sludge from a septic chamber, digested liquid of sludge, or waste water released from chemical plants.

### (Anaerobic treatment step 1)

According to the anaerobic treatment step 1, organic waste water or organic sludge is subjected to an anaerobic treatment in the anaerobic digestion chamber 1a to obtain generated gas containing methane gas, anaerobically treated water, and anaerobically treated sludge, and the anaerobically treated sludge is supplied to the phosphorus separation step 2 while the generated gas and anaerobically treated sludge are discharged to an outside of the system.

As described herein, the anaerobic treatment means a biological treatment method by which an organic matter is decomposed to methane gas, carbon dioxide gas, or the like by utilizing a metabolic reaction of an anaerobic microorganism which grows under an anaerobic environment with no oxygen. In other words, it indicates the whole treatment step in which an anaerobic environment is given to organic waste water or sludge, and it is a treatment including acid fermentation, methane fermentation, anaerobic digestion, or the like.

As for the specific anaerobic treatment, a known method including an anaerobic digestion in which anaerobic microorganisms are maintained in a suspended state, an upflow anaerobic sludge blanket (UASB) in which granular sludge consisting of self-granulating anaerobic microorganisms are maintained, an anaerobic fluid bed method in which anaerobic microorganisms are maintained on a surface of fluid carrier such as sand or particulate active carbon, and an anaerobic fixed bed method in which anaerobic microorganisms are maintained on a surface of filler in fixed bed can be suitably employed.

As for an apparatus for performing an anaerobic treatment step, it is sufficient to have the anaerobic digestion chamber 1a as a reaction chamber for anaerobic digestion. It is also sufficient that the anaerobic digestion chamber 1a is connected with a raw water supply pipe and a pipe for discharging anaerobically treated sludge.

According to the anaerobic treatment step 1, as a decomposition metabolite of a process for decomposition of an organic matter, a MAP substrate component such as an ammonium ion, a phosphate ion, or a magnesium ion that are required for synthesis of magnesium ammonium phosphate (also referred to as "MAP") is eluted into the anaerobically treated sludge 4.

In a weak alkaline state with pH of about 7.2 to 8.4 or so in the anaerobic digestion chamber 1a, a MAP producing reaction is promoted so that MAP crystals are generated from those MAP substrate components in the anaerobic digestion chamber 1a. The MAP crystals have various shapes including fine particles with particle diameter of less than 25 µm (that is, "fine MAP particles"), particles with particle diameter of from 25 µm to several millimeters (referred to as "crude MAP particles"), and also crystals adhering and growing on surface of an inner wall or bottom of a chamber or a stirring blade, or the like.

Thus, in the anaerobically treated sludge 4 discharged from the anaerobic digestion chamber 1a, those fine MAP particles, crude MAP particles, and also dissolved phosphorus components are contained.

The anaerobically treated sludge 4 obtained from the anaerobic treatment step 1 is preferably sludge in which a volatile suspended substance (also referred to as "VSS"), that is, a solid component derived from organic sludge, is present at 3000 mg/l or higher in the sludge, and a content of the phosphorus derived from MAP particles of less than 25 µm (also referred to as "fine MAP particles") is 5% or higher relative to the total phosphorus content in the sludge, and also 95% or lower, and in particular, present at ratio of 20% or lower from the multiple viewpoints including operational condition.

### <Phosphorus separation step 2>

According to the phosphorus separation step 2, the anaerobically treated sludge 4 obtained from the anaerobic treatment step 1 is separated into the MAP concentrated slurry 2a2 containing crude MAP particles and the MAP depleted sludge 2a1 ("the MAP separation step 2a"), the MAP depleted sludge 2a1 is supplied to a pH adjustment step and the MAP concentrated slurry 2a2 is admixed with the solid-liquid separation water 3ab (the separation water 3a2 and the dewatered filtrate 3b2), which is returned from the sludge amount reduction step 3 to be described below, and if necessary, added with Mg source or the pH adjusting agent 2b2, and by using the crude MAP particles contained in the MAP concentrated slurry 2a2 as seed crystals, the MAP particles are grown by crystallizing and precipitating, as MAP, a phosphorus component dissolved in the MAP concentrated slurry 2a2, the separation water 3a2 and the dewatered filtrate 3b2 ("the MAP treatment step 2b") followed by separating and recovering the grown MAP particles ("the MAP recovery step 2c").

### (MAP separation step 2a)

According to the MAP separation step 2a, the anaerobically treated sludge 4 is separated into the MAP concentrated slurry 2a2 containing a large amount of crude MAP particles and the MAP depleted sludge 2a1 as described above.

As for the method for separating the anaerobically treated sludge 4 into the MAP concentrated slurry 2a2 and the MAP depleted sludge 2a1, a method using an apparatus for solid-liquid separation such as a liquid cyclone described in WO 2003/086990 A or the like can be employed. Specifically, by adding the anaerobically treated sludge 4 to a liquid cyclone or the like after removing impurities such as hair, seeds, or saw dust present in sludge by using a vibrating sieve with pore size of 1 mm to 5 mm, it can be separated into the MAP concentrated slurry 2a2 and the MAP depleted sludge 2a1.
At that time, the removed impurities can be directly disposed, or it is also possible to be used as a dewatering aid by adding it to the MAP depleted sludge 2a1 at the beginning of the following dewatering step 3b.

### (MAP treatment step 2b)

According to the MAP treatment step 2b, the MAP concentrated slurry 2a2 which has been separated from the MAP separation step 2a and the solid-liquid separation water 3ab which has been returned from the sludge amount reduction step 3 (that is, the separation water 3a2 and the dewatered filtrate 3b2) are admixed with each other, and if necessary, added with Mg source or the pH adjusting agent 2b2, and by using the crude MAP particles contained in the MAP concentrated slurry 2a2 as seed crystals for crystallization and precipitation reaction of MAP, the MAP particles are grown by crystallizing and precipitating, as MAP, a phosphorus component dissolved in the MAP concentrated slurry 2a2, the separation water 3a2, and the dewatered filtrate 3b2.

Since crude MAP particles are contained in the MAP concentrated slurry 2a2 while a MAP substrate component such as an ammonium ion, a phosphate ion, or a magnesium ion that are required for synthesis of MAP is dissolved in the MAP concentrated slurry 2a2 and the solid-liquid separation water 3ab (the separation water 3a2 and the dewatered filtrate 3b2) returned from the sludge amount reduction step 3, and if necessary, by adding 2b2 such as Mg source or a pH adjusting agent, the crude MAP particles are used as seed crystals for crystallization and precipitation reaction of MAP, and thus the reaction for growing MAP particles can progress by crystallizing and precipitating, as MAP, a dissolved phosphorus component.

Because the MAP producing reaction is promoted under weakly alkaline condition such as pH of from about 7.2 to 8.4, it is desirable to add a pH adjusting agent to have the pH range.

Examples of the pH adjusting agent which may be used include, in addition to a caustic substance as an alkalifying agent, magnesium hydroxide. Meanwhile, sulfuric acid is suitable as an acidifying agent.

However, the dewatered filtrate 3b2 obtained from the dewatering step may have pH of about 3.5 to 5.0, and in such case, the dewatered filtrate 3b2 can play a role of a pH adjusting agent.

Meanwhile, as for the examples of the Mg source to be added, sea water or the like may be used in addition to magnesium hydroxide and magnesium chloride.

Further, when an ammonium ion or a phosphate ion is not sufficient, the insufficient MAP substrate component is preferably added.

As for an apparatus for performing the MAP treatment step 2b, an apparatus of crystallization and precipitation reaction equipped with a reaction chamber for performing the crystallization of crude MAP particles can be used. For example, it is possible to use a reaction chamber for crystallization and precipitation such as an upflow fluidized bed type or a complete mixing type.

When MAP particles are grown by crystallizing and precipitating, as MAP, a dissolved phosphorus component as described above, it is preferable to make a slow adjustment to have pH range of from 7.2 to 8.4 in which crystallization and precipitation of MAP is promoted. Specifically, pH adjustment of at least two stages is performed. It is preferable that pH is adjusted to 6.4 to 7.5 at the first stage and adjusted to 7.2 to 8.4 at the second stage. The reason is that, if the adjustment is made abruptly to the pH range (that is, from 7.2 to 8.4) in which crystallization and precipitation of MAP is promoted, the reaction of producing fine MAP particles also progresses in addition to the crystallization and precipitation of MAP by using MAP particles in sludge as seed crystals.

As a specific method, it is possible that a reaction chamber with two or more stages is connected in series as a MAP reaction chamber and the setting pH is gradually increased. For example, it is possible that the setting pH of the MAP reaction chamber at the first stage is adjusted to 6.4 to 7.5, inside of the reaction chamber is prepared as a complete mixing type reactor in which particulate MAP concentration is high, the setting pH of the MAP reaction chamber at the second stage is adjusted to 7.2 to 8.4, and the inside of the reaction chamber is prepared to be an upflow fluidized bed type reactor.

Further, in the region with pH of 5.5 or higher in which MAP can be crystallized and precipitated, it is preferable to have a state with high concentration of particulate MAP in a reaction part in which the supersaturation degree of MAP may drastically increase.

Thus, a pH adjusting agent such as low pH phosphorus-containing liquid, Mg source, or the like is preferably first brought into contact with a liquid in which ratio of MAP particles in suspended substances (SS) such as MAP concentrated slurry after MAP particle separation by using a liquid cyclone or the like is 5% or higher and added to a liquid inside the MAP reaction chamber.

### (MAP recovery step 2c)

According to the MAP recovery step 2c, the MAP particles grown by the MAP treatment step 2b are separated and recovered as the recovered phosphorus 2c1.

As for a method for recovery of MAP particles, a method in which they are removed at appropriate timing from a bottom part of the reaction chamber of the MAP treatment step 2b, a method in which they are removed from a top part of the reaction chamber by using an air lift pump, or the like can be adopted.

Meanwhile, the residues from which MAP particles are separated and recovered in the MAP recovery step 2c can be supplied to the sludge amount reduction step 3, together with the MAP depleted sludge 2a1.

### <pH Adjustment step A>

According to the pH adjustment step A, pH of the MAP depleted sludge 2a1 supplied from the phosphorus separation step 2 is adjusted to 3.5 to 6.8 so that MAP particles remaining in the MAP depleted sludge 2a1 are dissolved to obtain the pH-adjusted sludge A1.

With regard to the pH region for adjustment, it is sufficient to have a pH region in which the MAP particles in sludge can be dissolved. Specifically, it is sufficient to have pH of 3.5 to 6.8. At that time, although a smaller sludge pH would result in a higher elution amount of phosphate ions that are derived from MAP particles, unnecessary metal ions such as iron ions, calcium ions, or aluminum ions may be eluted when the pH becomes excessively low, and those unnecessary metal ions may bind to phosphate ions when pH is increases, thus preventing MAP production.

For such reasons, in the pH adjustment step A, sludge pH is adjusted to 3.5 to 6.8, and it is preferably adjusted to pH 4.5 to 6.5.

As a means for lowering pH, a method of adding an acidic solution such as sulfuric acid, nitric acid, or hydrochloric acid can be mentioned. The pH can be also lowered by adding an acidic inorganic coagulation agent such as polyiron or sulfuric acid band. Among them, not to lower the phosphate ions in the solid-liquid separation water 3ab, it is preferable that a component capable of yielding a reaction product according to binding with phosphate ions in MAP depleted sludge is not present or it has low concentration such as less than 3%. From this point of view, it is preferable to use, as a pH adjusting agent, those in which iron ions, calcium ions, or aluminum ions are not dissolved.

Meanwhile, a malodor component such as hydrogen sulfide may be generated by adding an acidic solution. For such case, generation of malodor can be suppressed according to conversion of hydrogen sulfide to iron sulfide by containing iron ions in an acidic solution to be added, in an amount of 0.2% or higher (in terms of iron) per solid matter in subject sludge.

### <Sludge amount reduction step 3>

According to the sludge amount reduction step 3, the pH-adjusted sludge A1 is concentrated and dewatered to obtain the dewatered cake 3b1 and a part or the whole of the solid-liquid separation water 3ab (the separation water 3a2, the dewatered filtrate 3b2) obtained by the concentration and dewatering is returned to the phosphorus separation step 2.

More specifically, as illustrated in Fig. 3, the pH-adjusted sludge A1 obtained from the pH adjustment step A is concentrated for separation into the concentrated sludge 3a1 and the separation water 3a2, the separation water 3a2 is supplied to the MAP treatment step 2b while the concentrated sludge 3a1 is recovered ("the concentration step 3a"), and next, the concentrated sludge 3a1 is dewatered for separation into the dewatered cake 3b1 and the dewatered filtrate 3b2 and the dewatered cake 3b1 id discharged, and the dewatered filtrate 3b2 is returned to the phosphorus separation step ("the dewatering step 3b").

### (Concentration step 3a)

According to the concentration step 3a, the pH-adjusted sludge A1 obtained from the pH adjustment step A is concentrated for separation into the concentrated sludge 3a1 and the separation water 3a2 and the separation water 3a2 is supplied to the MAP treatment step 2b while the concentrated sludge 3a1 is recovered.

Examples of the means for separation into the concentrated sludge 3a1 and the separation water 3a2 include a concentration method using a concentrator of gravity filtration type, centrifugal separation type, screen or membrane separation type.

In the concentration step 3a, as a standard for the concentration, it is preferable to carry out the concentration such that water content in the concentrated sludge 3a1 is 4 to 15%, in particular 9% or more or 13% or less.

### (Dewatering step 3b)

In the dewatering step 3b, the concentrated sludge 3a1 is dewatered for separation into the dewatered cake 3b1 and the dewatered filtrate 3b2 and the dewatered filtrate 3b2 is returned to the phosphorus separation step 2 while the dewatered cake 3b1 is discharged.

As for an apparatus for performing the dewatering treatment, any kind of dewatering apparatus including belt press, screw press, and centrifugal dewatering can be applied.

In the concentration step 3b, as a standard for the concentration, it is preferable to carry out the concentration such that water content in the concentrated sludge 3b1 is 82 to 65% in particular 72% or more or 78% or less.

### (Coagulation agent)

It is possible that a coagulation agent is added to the pH-adjusted sludge A1 in the concentration step 3a followed by concentration, or a coagulation agent is added to the concentrated sludge 3a1 in the concentration step 3b followed by dewatering. It is also possible that a coagulation agent is added in both steps.

When a coagulation agent is added after concentration of the pH-adjusted sludge A1, not only the amount of a coagulation agent to be used can be reduced but also a coagulation agent can be homogeneously mixed with sludge, and thus the dewatering efficiency can be increased. Further, as the amount of the solid-liquid separation water 3ab (the dewatered filtrate 3b2) obtained by dewatering is lower than the amount of the solid-liquid separation water 3ab obtained by concentration, even when an inorganic coagulation agent such as polyiron is added after the concentration, the amount of iron ions in the solid-liquid separation water 3ab to be returned can be suppressed at low level.

Examples of the coagulation agent include a polymer coagulation agent and an inorganic coagulation agent.

Examples of the polymer coagulation agent include a cationic polymer coagulation agent and an amphoteric polymer coagulation agent. It is also possible to use a mixture of a cationic polymer coagulation agent and an anionic polymer coagulation agent.

Examples of the inorganic coagulation agent include an iron-based coagulation aid such as polyiron (iron concentration of 5 to 15%) and iron salt, sulfuric acid band, and an aluminum-based coagulation aid such as PAC.

The unnecessary metal ions such as iron ions or aluminum ions derived from an inorganic coagulation agent bind with phosphate ions in sludge to prevent MAP production. Thus, in at least in the solid-liquid separation water 3ab to be returned, concentration of the unnecessary metal ions is preferably kept at low level. In other words, the addition amount of an inorganic coagulation agent is preferably adjusted considering the dewatering efficiency and concentration of the unnecessary metal ions in the solid-liquid separation water 3ab.

From the same point of view, it is effective to add an inorganic coagulation agent before the dewatering step 3b without adding it in the dewatering step 3a. At that time, it is also effective not to return the dewatered filtrate 3b2 to the phosphorus separation step 2.

As a preferred example, a method in which the pH-adjusted sludge A1 is added with a polymer coagulation agent followed by concentration for separation into the concentrated sludge 3a1 and the separation water 3a2 and then the concentrated sludge 3a1 is added with an inorganic coagulation agent followed by dewatering for separation into the dewatered cake 3b1 and the dewatered filtrate 3b2 can be mentioned.

As for a device for adding a coagulation agent to sludge, there are an devices in which a coagulation agent is added by itself to an apparatus in which sludge is present, a device for quantitative supply of a solution of coagulation agent by using a pump, or the like.

Meanwhile, when an inorganic coagulation agent such as polyiron is added followed by solid-liquid separation such as concentration or dewatering in the sludge amount reduction step 3 (the concentration step 3a or the dewatering step 3b), phosphate ions bind to metal ions of the inorganic coagulation ions (that is, iron ions of polyiron) to generate phosphate salts, and they are separated to a solid side according to solid-liquid separation. As a result, phosphate ions in the solid-liquid separation water 3ab are lowered. For such reasons, there might be a possibility that the importance of returning the solid-liquid separation water 3ab to the phosphorus separation step 2 is diluted. However, since MAP substrate component other than phosphate ions, that is, Mg ion, NH₄ ion, or the like, are present at high concentration in the solid-liquid separation water 3ab, the effective utilization can be made by supplying the solid-liquid separation water 3ab to the MAP treatment step 2b of the phosphorus separation step 2.

It is also possible to further add, as an aid for improving dewatering property, a liquid polymer with component dissolution concentration of 1% or higher or a cellulose-based fibrous material of the same or less than 5 mm, together with the aforementioned coagulation agent.

When the aid for improving dewatering property is used at 7% or less (in total amount) or so compared to TS of the sludge, a merit in terms of cost can be easily obtained.

### (Returning the solid-liquid separation water 3ab)

The separation water 3a2 obtained from the concentration step 3a and the dewatered filtrate 3b2 obtained from the dewatering step 3b are returned to the MAP treatment step 2b of the phosphorus separation step 2. It is also possible to return only the separation water 3a2 to the MAP treatment step 2b.

In the separation water 3a2 and the dewatered filtrate 3b2, components resulting from the dissolved MAP particles in the pH adjustment step A, that is, MAP substrate component required for MAP synthesis including phosphate ions (PO₄-P), magnesium ions, and ammonium ions, are dissolved.

Meanwhile, the separation water 3a2 and the dewatered filtrate 3b2 may be adjusted to have pH of from 3.5 to 6.8 according to the pH adjustment in the pH adjustment step A. For such case, as it can be used as a substitute for the pH adjusting agent that is used in the MAP treatment step 2b in previous stage, chemical use amount can be reduced. In particular, for a case in which addition of Mg source and pH adjustment are made with magnesium hydroxide and sulfuric acid, it is particularly effective as a substitute for sulfuric acid.

### (Solubilization treatment for organic components)

It is also possible to perform a solubilization treatment for converting a part of the organic components that are present in sludge, for example, organic waste water or organic sludge as a treatment subject of the present treatment method I, the anaerobically treated sludge 4 obtained from the anaerobic treatment step 1, the MAP concentrated slurry 2a2, or the MAP depleted sludge 2a1, into soluble components.

Such solubilization treatment can be suitably performed in any previous stage of the pH adjustment step A, that is, before stage of the anaerobic treatment step 1, during the anaerobic treatment step 1, or after the anaerobic treatment step 1.

Examples of the solubilization treatment for organic components include an ozone treatment, an ultrasonic treatment, a hydrothermal treatment, and an electrolysis.

As a result of the research and studies carried out by the inventors, it was confirmed that, by adopting a hydrothermal treatment with setting temperature of 70 to 90°C and retention time of 40 to 75 minutes among those solubilization treatments, recovery of phosphorus which is recovered as MAP in the phosphorus separation step 2 can be most efficiently increased in terms of the effect compared to cost and also problems like generation of malodor, coloration of treated water, or the like that are caused by a hydrothermal treatment can be significantly suppressed.

According to the solubilization treatment of organic components described above, ratio of solid organic matters is lowered so that soluble components can be increased. In the soluble components that are freshly eluted by the solubilization treatment, phosphate ions, magnesium ions, ammonium ions, or the like for constituting MAP are contained. Thus, by performing the solubilization treatment in the anaerobic treatment step 1, for example, MAP particles with various particle diameters can be contained therein in a large amount. As a result, those MAP particles can be recovered more so that the phosphorus recovery ratio can be further increased.

### <Present treatment method II>

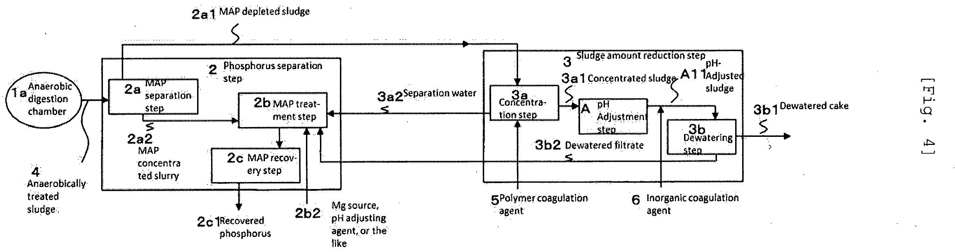

As an exemplary embodiment of the present invention, the method for treating organic waste water or organic sludge illustrated in Fig. 4 (referred to as "the present treatment method II") will be described.

The present treatment method II is a method in which the pH adjustment step A of the present treatment method I is performed in the sludge amount reduction step 3 as illustrated in Fig. 4. In other words, in the sludge amount reduction step 3, the pH adjustment step is performed after concentrating the MAP depleted sludge 2a1. More specifically, the MAP depleted sludge 2a1 separated from the phosphorus separation step 2 is concentrated, pH of the concentrated sludge 3a1 is lowered to dissolve MAP particle remaining in the concentrated sludge 3a1, thereby obtaining the pH-adjusted sludge A11, the pH-adjusted sludge A11 is dewatered to obtain the dewatered cake 3b1, and a part or the whole of the solid-liquid separation water 3ab (the separation water 3a, the dewatered filtrate 3b2) obtained by the dewatering is returned to the phosphorus separation step 2.

Specifically, according to the present treatment method II, as illustrated in Fig. 4, there is "the anaerobic treatment step 1" for an anaerobic treatment of organic waste water or organic sludge, and the MAP concentrated slurry 2a2 and the MAP depleted sludge 2a1 are separated from the anaerobically treated sludge 4 obtained by the anaerobic treatment step 1, the MAP depleted sludge 2a1 is supplied to the following sludge amount reduction step 3 (the MAP separation step 2a), the MAP concentrated slurry 2a2 is admixed with solid-liquid separation water 3ab (the separation water 3a, the dewatered filtrate 3b2) returned from the following sludge amount reduction step 3, and if necessary, added with Mg source, the pH adjusting agent 2b2, or the like, MAP particles are grown by crystallizing and precipitating, as MAP, a phosphorus component dissolved in the solid-liquid separation water 3ab (the separation water 3a, the dewatered filtrate 3b2) by using MAP particles contained in the MAP concentrated slurry 2a2 as seed crystals (the MAP treatment step 2b), and the grown MAP particles are recovered (the MAP recovery step 2c) to perform "the phosphorus separation step 2". Meanwhile, it is a method in which the MAP depleted sludge 2a1 is concentrated to obtain the concentrated sludge 3a1 and the separation water 3a (the concentration step 3a), pH is adjusted to 6.8 or less by adding an acid to the obtained the concentrated sludge 3a1 while the separation water 3a is returned to the MAP treatment step 2b of the phosphorus separation step 2, MAP particles remaining in the concentrated sludge 3a1 are dissolved to obtain the pH-adjusted sludge A11 (the pH adjustment step A), the pH-adjusted sludge A11 is dewatered for separation into the dewatered cake 3b1 and the dewatered filtrate 3b2, and the dewatered filtrate 3b2 is returned to the MAP treatment step 2b of the phosphorus separation step 2 (the dewatering step 3b) while the dewatered cake 3b1 is discharged so that "the sludge amount reduction step 3" is performed as illustrated in Fig. 4.

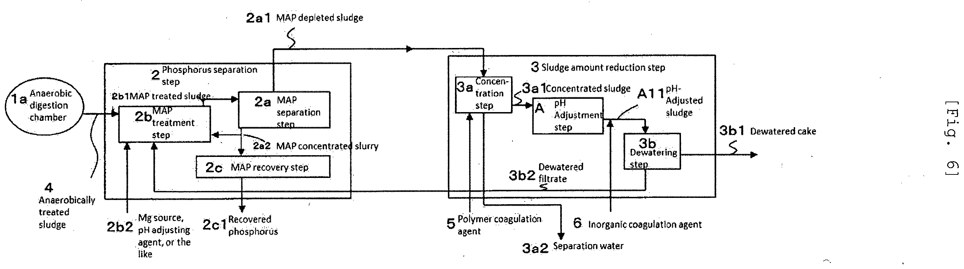

As described above, when an acid is added to lower pH and to dissolve MAP particles after concentrating the MAP depleted sludge 2a1, followed by dewatering, pH adjustment is made for sludge prepared to be less soluble. Thus, the amount of an acid used for pH adjustment can be reduced and the phosphorus recovery ratio can be increased. The treatment method of Fig. 6 is also the same as above.

In this case, since the concentration of MAP particles remaining in the concentrated sludge 3a1 can be increased by increasing the concentration ratio of the concentration step 3a, concentration of phosphate ions in the dewatered filtrate 3b2, which is returned to the phosphorus separation step 2, can be increased, and as a result, the phosphorus recovery ratio can be improved. Meanwhile, if the concentration ratio of the concentration step 3a is excessively increased, it is difficult to achieve even permeation of chemicals such as sulfuric acid in the pH adjustment step or the coagulation property of coagulated and concentrated floc may be lowered. From this point of view, in the concentration step 3a, the concentration is preferably made such that sludge concentration in the concentrated sludge 3a1 is 6 to 13% or so.

Meanwhile, with regard to those other than particularly described for the present treatment method II, the present treatment method II is the same as the present treatment method I.

### <Present treatment method III · IV>

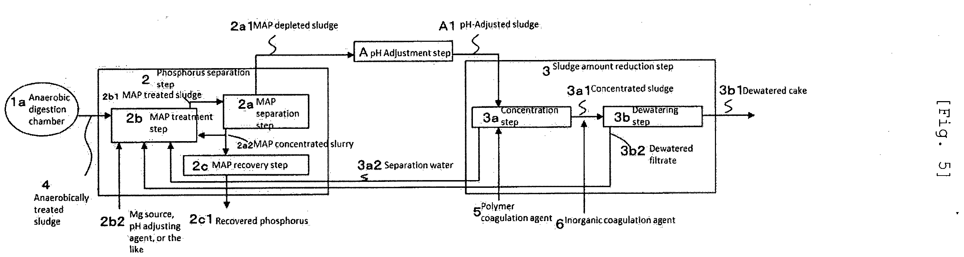

As an exemplary embodiment of the present invention, the method for treating organic waste water or organic sludge illustrated in Figs. 5 and 6 (referred to as "the present treatment method III" and "the present treatment method IV") will be described.

The present treatment method III is a treatment method in which order of the MAP separation step 2a and the MAP treatment step 2b in the phosphorus separation step 2 of the present treatment method I is reversed as illustrated in Fig. 5.

Further, the present treatment method IV is a treatment method in which order of the MAP separation step 2a and the MAP treatment step 2b in the phosphorus separation step 2 of the present treatment method II is reversed as illustrated in Fig. 6.

The phosphorus separation step 2 of the present treatment method III and IV is a method in which the anaerobically treated sludge 4 obtained by the anaerobic treatment step 1 is admixed with the MAP concentrated slurry 2a2 returned from the MAP separation step 2a and the solid-liquid separation water 3ab returned from the sludge amount reduction step 3 (the separation water 3a2, the dewatered filtrate 3b2), and if necessary, added with Mg source and the pH adjusting agent 2b2, MAP particles are grown by crystallizing and precipitating, as MAP, a phosphorus component dissolved in the anaerobically treated sludge 4, the MAP concentrated slurry 2a2, the separation water 3a2, and the dewatered filtrate 3b2 by using crude MAP particles contained in the anaerobically treated sludge 4 and the MAP concentrated slurry 2a2 as seed crystals ("the MAP treatment step 2b"), followed by separation into the MAP concentrated slurry 2a2 containing the grown MAP particles and the MAP depleted sludge 2a1, the MAP depleted sludge 2a1 is supplied to the following pH adjustment step A, a part of the MAP concentrated slurry 2a2 is returned to the MAP treatment step 2b ("the MAP treatment step 2a"), and the MAP particles are recovered from the remaining MAP concentrated slurry 2a2 ("the MAP recovery step 2c")

Meanwhile, although the MAP depleted sludge 2a1 supplied from the phosphorus separation step 2 is concentrated and dewatered and the obtained separation water 3a is returned to the phosphorus separation step 2 according to the present treatment method II, according to the present treatment method IV, however, the separation water 3a is discharged to an outside of the system.

Meanwhile, with regard to those other than particularly described for the present treatment methods III and IV, the present treatment methods III and IV are the same as the present treatment method I.

However, for a case in which the pH adjustment step A is included in the early stage of the concentration step 3a (Figs. 3 and 5), it is preferable to perform the pH adjustment before adding a polymer coagulation agent. The reason is that, when a polymer coagulation agent is added before the pH adjustment step A, fine MAP particles are incorporated in a coagulated sludge so that the ratio of preventing a contact with an added acid can become higher.

Meanwhile, for a case in which the pH adjustment step A is included in the late stage of the concentration step 3a (Figs. 4 and 6), it is preferable to have a state in which concentration of the concentrated sludge 3a1 is relatively high, for example, 10% or higher. Further, because there is a possibility that the coagulation property of coagulated and concentrated floc is partially suppressed by acid addition and permeation, it is also effective for such case to add an aid for improving dewatering property or the like.

Further, for the treatment process after pH adjustment to dewatering treatment of the present treatment method I to IV, it is also possible that the dewatering treatment is performed after diluting sludge by adding dilution water to sludge.

By performing the dewatering treatment after diluting sludge, the amount of MAP-constituting components like phosphate ions, magnesium ions, or ammonium ions that are contained in moisture remained in dewatered cake can be reduced, and on the other hand, the amount of those MAP-constituting components in the dewatered filtrate 3b2 can be increased. As a result, the phosphorus recovery ratio can be further increased.

However, because there is a possibility that the dewatering property is impaired or MAP production efficiency of the MAP treatment step is lowered when the dilution ratio is increased too much, the dilution ratio is preferably 1.2 to 7.0 folds.

As for the dilution water which may be used, any liquid not greatly influencing the dewatering treatment and not containing a large amount of components having a possibility of binding with phosphate ions can be used. Examples thereof include tap water, ground water, sand filtered water, and sewage treated water.

Further, it is also effective to dilute substantially the sludge with a method for adding an acid additive such as sulfuric acid added for pH adjustment after diluting its concentration with water or the like.

### <Explanation of Terminology>

Further, "%" described in the detailed description, drawings, and claims of the present application is based on mass ratio, unless specifically described otherwise.

### EXAMPLES

Next, an exemplary result of operating a test plant in which the waste water treatment technique of the present invention is actually applied is explained. However, the present invention is not limited to the examples.

Meanwhile, in the following examples, the "depletion liquid type MAP mode" means the phosphorus separation step mode illustrated in Figs. 3 and 4, and the "sludge type MAP mode" means the phosphorus separation step mode illustrated in Figs. 5 and 6.

### <Method for measuring and determining MAP particle diameter>

Particle diameter of the MAP particles was measured by using a laser diffraction/scattering type particles size distribution analyzer (LA-910, manufactured by Horiba, Ltd.) and an ultrasonic sieve (Microsieve Shodex PS, manufactured by Showa Denko K.K.).

With regard to a method for measuring and determining MAP particle diameter, a sample such as MAP concentrated slurry containing crude MAP particles as a main component was measured by using a laser diffraction/scattering type particles size distribution analyzer and a sample such as MAP depleted sludge containing fine MAP particles as main component was examined by using an ultrasonic sieve to determine the presence amount of those less than 25 µm.

Specific explanations are given below.

For a sample containing crude MAP particles as a main component, 200 ml of a subject sample was taken in a 1 L beaker and added with 800 ml of alkali water at pH 8.0. After keeping it for 2 minutes following stirring, the supernatant was carefully separated and the particulate substance on a bottom part of the beaker was collected. Then, the particle diameter of particles in the recovered product was measured by using a laser diffraction/scattering type particles size distribution analyzer.

The measurement apparatus generally allows measurement of from 0.1 µm to 1000 µm. The particles less than 25 µm are tiny and, and for example, for common anaerobically treated sludge in which crude MAP particles are present at 0.5 g/l or higher in the sludge, at least 98% of the particle sample separated in the bottom of the 1 L beaker according to the above method were equal to or larger than 25 µm.

For the sample containing fine MAP as a main component, a sample corresponding to approximately 1 g in terms of solid matter was collected, diluted with alkali water at pH 8.0, and by using an ultrasonic sieve added with a microsieve having pore size of 25 µm, presence ratio between the particles equal to or larger than 25 µm and the particles smaller than 25 µm was measured. When the sample was MAP depleted sludge which has been obtained after classification of common anaerobically treated sludge using a liquid cyclone, ratio of the particles equal to or larger than 25 µm was approximately less than 1%, and almost entire fine particles were smaller than 25 µm.

### <Example 1 (Examples 1-1 to 1-3), Comparative Examples 1-1 to 1-2>

Example 1 is an example in which a pilot plant test is performed by using sludge from the sewage water treatment facility A. The flow is "the depletion liquid type MAP mode" like the flow of Fig. 4 explained before.

The treatment facility A adopts an anaerobic digestion treatment of sludge.

According to the pilot plant of Example 1, the anaerobically treated sludge (properties are listed in Table 1) discharged from the digestion chamber of the treatment facility A was introduced to a shaking sieving machine with a pore size of 3 mm to separate impurities such as hair or seeds, the sludge after depleting impurities was introduced to a liquid cyclone with body diameter of 10.16 cm (4 inches), and MAP concentrated slurry discharged from an under exit (diameter: 12 mm) of the liquid cyclone was introduced to a MAP reaction chamber for the MAP treatment step.

In four series of Examples 1-1 and 1-2 and Comparative Examples 1-1 and 1-2, a MAP reaction chamber consisting of one complete mixing type chamber was used. The setting pH was 8.1 ± 0.2. The presence amount of MAP particles inside the chamber was set at 100 g/l or more.

Only in Example 1-3, a two-chamber type MAP reaction chamber consisting of the first MAP reaction chamber and the second MAP reaction chamber was adopted.

Among them, the first MAP reaction chamber is a complete mixing type, and it has a mechanism in which separation water, dewatered filtrate, and Mg source or a pH adjusting agent at rear end is initially contacted with the MAP concentrated slurry separated by a liquid cyclone at front end.

The setting pH of the first MAP reaction chamber was 7.1 ± 0.2, and the constitution was made to introduce circulation liquid from the second MAP reaction chamber so that the particulate MAP concentration can be controlled to 30 g/l or higher in the reaction chamber.

Meanwhile, the second MAP reaction chamber was an upflow fluidized bed type reaction chamber and the setting pH was 8.1 ± 0.2. The MAP reaction chamber has a cylinder shape so that, starting from the bottom, MAP concentrated suspension, separation water, dewatered filtrate, and Mg source or a pH adjusting agent can be introduced.

In the second MAP reaction chamber, the internal liquid is withdrawn from the middle part and injected from the bottom as a circulating flow with circulating flow amount magnification of 2.5 folds. Further, the upflow flow rate was 15 to 30 m/h. The region above the middle part for withdrawal has a large diameter of reaction chamber, and thus a reaction chamber for allowing dramatically lowering upward flow in that zone was adopted. According to adoption of such reaction chamber, it is possible to have a state in which the MAP particles with large particle diameter is settled in the bottom part of the reaction chamber and the relatively fine particles stay in the top part of the reaction chamber. Height of the fluid bed formed of the MAP particles in the MAP reaction chamber increases as the MAP particles grow.

The MAP particles with increased height in the fluid bed were periodically released from the bottom part of the MAP reaction chamber via a pipe for releasing MAP particles. The MAP particles released from the bottom part have large diameter and are dense among the MAP particles present in the fluid bed. Further, on the first and the second MAP reaction chambers, a pH meter was installed for real time measurement of pH, and injection control of magnesium hydroxide and sulfuric acid, each is an alkalifying agent and an acidifying agent, respectively, was performed.

With regard to supply of Mg source, the addition was made while controlling the Mg/P ratio at 1.2 within the reaction chamber.

The MAP depleted sludge discharged from an over exit of a liquid cyclone was designed to be introduced to the concentration step.

The apparatus for performing the concentration step consists of a coagulation reaction chamber and a concentrator. The retention time in the coagulation reaction chamber was set at 3 minutes. An amphoteric polymer coagulation agent having slightly high cationic degree was added at addition ratio of 1.8% per sludge TS for aggregating sludge. After that, it was introduced into a multi-disc silt type concentrator equipped with a back pressure plate and then subjected to the concentration treatment until the sludge concentration becomes 11 to 13%.

The separation water separated by the concentration treatment was introduced to the previous MAP reaction chamber.

With regard to the concentrated sludge, only for Example, it was added to an apparatus for pH adjustment and added with sulfuric acid so that adjustment is made to have pH 5.5. After that, polyiron as an inorganic coagulation agent was added at 1.5% (as Fe) per sludge TS, kneaded using an apparatus for kneading sludge, and introduced to a screw press type dewatering apparatus for dewatering.

The cake dewatered by the dewatering apparatus was withdrawn to an outside of the system, and the dewatered filtrate was designed to be introduced into the MAP reaction chamber in previous stage.

Operation series and brief conditions for operation were as follows.
Example 1-1: adjusted pH value 5.5 - no polyiron
Example 1-2: adjusted pH value 5.5 - polyiron addition ratio: 1.5%
Example 1-3: adjusted pH value 5.5 - polyiron addition ratio: 1.5% - two-stage MAP chamber
Comparative Example 1-1: without pH adjustment - no polyiron (Comparative Example of Example 1-1)
Comparative Example 1-2: without pH adjustment - polyiron addition ratio: 1.5% (Comparative Example of Example 1-2)

Properties of the anaerobically treated sludge of the treatment facility A used for above treatment are listed in Table 1.

VSS derived from sludge organic matter in the anaerobically treated sludge was present in an amount of 12.4 g/l, and the phosphorus component in fine MAP particles (that is, particle diameter of less than 25 µm) was present at 21.6% of T-P in the sludge. The treatment score is listed in Table 2.
[Table 1]

**Table 1 Properties of digested sludge**

| | |
|---|---|
| TS | 19.7 g/l |
| SS | 17.1 g/l |
| VSS | 12.4 g/l |
| T-P | 862 mg/l |
| Fine MAP particles-P 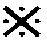 | 186 mg/l |
| Fine MAP-P/T-P | 21.6% |
| pH | 7.5 |
| M-alkalinity | 3750 mg/l |
| PO₄-P | 214 mg/l |
| NH₄-N | 910 mg/l |
| Mg | 4.4 mg/l |

| | |
|---|---|
| 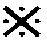 Fine MAP particles-P represents concentration of phosphorus component contained in MAP particles with particle diameter of less than 25 µm | |

**[Table 2]**

| Item (operation condition) | Example 1-1 (no polyiron) (pH adjustment: 5.5) | Example 1-2 (polyiron: 1.5%) (pH adjustment: 5.5) | Example 1-3 (polyiron: 1.5%) (pH adjustment: 5.5) (two-stage MAP chamber) | Comparative Example 1-1 (no polyiron) (without pH adjustment) | Comparative Example 1-2 (polyiron: 1.5%) (without pH adjustment) |
|---|---|---|---|---|---|
| MAP recovery amount per 1 L sludge | 3.18 g/l L Sludge | 3.53 g/l L Sludge | 3.85 g/l L Sludge | 2.49 g/l L Sludge | 2.40 g/l L Sludge |
| Chemical cost per kg of recovered MAP: (Mg (OH)₂) | 8.2 Yen/kg-MAP | 6.1 Yen/kg-MAP | 5.6 Yen/kg-MAP | 10.6 Yen/kg-MAP | 7.9 Yen/kg-MAP |
| Chemical cost per kg of recovered MAP: (H₂SO₄) | 8.1 Yen/kg-MAP | 5.5 Yen/kg-MAP | 4.1 Yen/kg-MAP | 5.0 Yen/kg-MAP | 3.9 Yen/kg-MAP |
| Total chemical cost | 16.3 Yen/kg-MAP | 11.6 Yen/kg-MAP | 9.7 Yen/kg-MAP | 15.6 Yen/kg-MAP | 11.8 Yen/kg-MAP |
| Water content in dewatered cake | 79.0% | 75.9% | 75.7% | 79.2% | 76.1% |

### (Results · Determination)

In Example 1-1, the MAP recovery amount per 1 L of sludge was 3.18 g/1 L sludge.

In Comparative Example 1-1, which is Comparative Example of Example 1-1, it was 2.49 g/1 L sludge, indicating that it is about 30% higher in Example 1-1. That is because, Comparative Example 1-1 does not has a pH adjustment step following the concentration step, thus acid dissolution of fine MAP particles or the like that are mixedly present in sludge cannot be achieved, and as a result, it was impossible to recover the phosphorus derived from the fine MAP.

In Example 1-2, the MAP recovery amount per 1 L of sludge was 3.53 g/1 L sludge. In Comparative Example 1-2, which is Comparative Example of Example 1-2, it was 2.40 g/1 L sludge, indicating that it is about 50% higher in Example 1-2. That is because, Comparative Example 1-2 does not has a pH adjustment step, thus acid dissolution of fine MAP particles or the like that are mixedly present in sludge cannot be achieved, and as a result, it was impossible to recover the phosphorus derived from the fine MAP.

Meanwhile, pH was lowered to 6.5 or so in Comparative Example 1-2 as polyiron was added at 1.5%. However, it is considered that at such pH level, there are only a small amount of eluted phosphate ions derived from fine MAP and, as the eluted phosphate ions bind to iron ions derived from polyiron to form iron phosphate, the phosphate ion concentration was rather lowered so that it cannot contribute to the improvement of MAP recovery ratio.

In Example 1-3, the MAP recovery amount per 1 L of sludge was 3.85 g/1 L sludge, indicating larger MAP recovery amount than Example 1-2. It was indeed the highest among the operations of five series. It is believed that, since a two-chamber type MAP reaction chamber is adopted in Examples 1 to 3, the crystallization and precipitation reaction is allowed to occur with relatively slow increasing pH without applying drastic pH increase on the substrate or the like that are supplied to the chamber, and it is the reason for exhibiting the highest MAP recovery ratio.

Next, descriptions will be described regarding the chemical cost.

Chemicals required for the MAP reaction include Mg source, Mg(OH)₂ as an alkalifying agent, and H₂SO₄ as a pH adjusting agent.

It was 16.3 Yen/kg-MAP for Example 1-1, which is almost the same as 15.6 Yen/kg-MAP of Comparative Example 1-1.

In terms of detailed cost, in Example 1-1, Mg(OH)₂ cost decreased while H₂SO₄ cost increased. It is believed that, although there was a cost increase due to H₂SO₄ used in the pH adjustment step of Example 1-1, the Mg cost per recovered MAP was lowered due to supply of Mg source and an increased MAP recovery amount as much as the MAP derived from dissolved fine MAP can be recovered, and thus the cost increase and cost decrease almost canceled each other.

It was 11.6 Yen/kg-MAP for Example 1-2, which is almost the same as 11.8 Yen/kg-MAP of Comparative Example 1-2. In terms of detailed cost, Mg(OH)₂ cost per recovered MAP decreased while H₂SO₄ cost used for the pH adjustment step increased in the Example such as the case with Example 1-1 and Comparative Example 1-1, but it is considered that the cost increase and cost decrease almost canceled each other.

The total chemical cost for Example 1-3 was 9.7 Yen/kg-MAP, exhibiting the smallest value. It is believed that, by having a two-chamber type MAP reaction chamber, occurrence rate of fine MAP is lowered and the amount of substrate derived from fine MAP, which circulates through a series of the treatments, was reduced so that the applied chemicals were efficiently consumed.

Next, the dewatering property is described.

In the sludge dewatering step, cake water content was almost the same in Examples 1-2, 1-3, and Comparative Example 1-2 in which an inorganic coagulation agent is used, that is, it was within a range of from 75.7 to 76.1%. Meanwhile, cake water content was also almost the same in Example 1-1 and Comparative Example 1-1 in which an inorganic coagulation agent is not used, that is, it was within a range of from 79.0 to 79.2%. Thus, the dewatering property was almost the same under the operation condition with pH 5.5 in the pH adjustment step, regardless of the presence or absence of the pH adjustment step.

From the above results, it was found that, as a process for exhibiting a phosphorus recovery with high recovery ratio at low cost and dewatering property with high efficiency according to the "depletion liquid type MAP mode", the method described in Example 1-3 is most favorable.

### <Example 2 (Examples 2-1 to 2-4) and Comparative Example 2-1 to 2-2>

Example 1 given above corresponds to a case in which the "depletion liquid type MAP mode" is adopted as a phosphorus separation step. As Example 2, a test for a case in which the "sludge type MAP mode" is adopted was also carried out.

Example 2 (Examples 2-1 to 2-2) is an example in which a pilot plant test is performed by using sludge from the sewage water treatment facility A such as Example 1. The flow is the same as the flow of Fig. 6 explained before. Further, as for the sludge used, sludge having the same properties as Example 1 was used.

In Example 2 (Examples 2-1 to 2-2), an apparatus almost the same as that of Example 1 was used and with regard to the MAP reaction chamber in the MAP treatment step, a single paddle stirring chamber of complete mixing type was used. Further, the dewatered filtrate supplied to the MAP reaction chamber has a flow that is first contacted with MAP concentrated slurry supplied from a liquid cyclone of the MAP separation step and then introduced to the MAP reaction chamber.

Further, in Example 2 (Examples 2-1 to 2-2), a case without adding an inorganic coagulation agent and a case with adding an inorganic coagulation agent were performed for the sludge amount reduction step.

Operation series and brief conditions for operation were as follows.
Example 2-1: adjusted pH value 5.5 - no polyiron
Example 2-2: adjusted pH value 5.5 - polyiron addition ratio: 1.5%
Comparative Example 1-1: without pH adjustment - no polyiron (Comparative Example of Example 2-1)
Comparative Example 1-2: without pH adjustment - polyiron addition ratio: 1.5% (Comparative Example of Example 2-2)

**[Table 3]**

| Item (operation condition) | Example 2-1 (no polyiron) (pH adjustment: 5.5) | Example 2-2 (polyiron: 1.5%) (pH adjustment: 5.5) | Comparative Example 2-1 (no polyiron) (without pH adjustment) | Comparative Example 2-2 (polyiron: 1.5%) (without pH adjustment) |
|---|---|---|---|---|
| MAP recovery amount per 1 L sludge | 3.28 g/l L Sludge | 3.59 g/l L Sludge | 2.52 g/l L Sludge | 2.45 g/l L Sludge |
| Chemical cost per kg of recovered MAP: (Mg(OH)₂) | 8.6 Yen/kg-MAP | 6.0 Yen/kg-MAP | 12.3 Yen/kg-MAP | 10.1 Yen/kg-MAP |
| Chemical cost per kg of recovered MAP: (H₂SO₄) | 8.3 Yen/kg-MAP | 5.2 Yen/kg-MAP | 5.2 Yen/kg-MAP | 4.6 Yen/kg-MAP |
| Total chemical cost | 16.9 Yen/kg-MAP | 11.2 Yen/kg-MAP | 17.5 Yen/kg-MAP | 14.7 Yen/kg-MAP |
| Water content in dewatered cake | 79.2% | 75.5% | 79.8% | 78.9% |

In Example 2-1, the MAP recovery amount per 1 L of sludge was 3.28 g/1 L sludge.

In Comparative Example 2-1, which is Comparative Example of Example 2-1, it was 2.52 g/1 L sludge, indicating that it is about 30% higher in Example 2-1.

That is because, Comparative Example 2-1 does not has a pH adjustment step following the concentration step, thus acid dissolution of fine MAP particles or the like that are mixedly present in sludge cannot be achieved, and as a result, it was impossible to recover the phosphorus derived from the fine MAP.

In Example 2-2, the MAP recovery amount per 1 L of sludge was 3.59 g/1 L sludge. In Comparative Example 2-2, which is Comparative Example of Example 2-2, it was 2.45 g/1 L sludge, indicating that it is about 50% higher in Example 2-2.

That is because, Comparative Example 2-2 does not has a pH adjustment step, thus acid dissolution of fine MAP particles or the like that are mixedly present in sludge cannot be achieved, and as a result, it was impossible to recover the phosphorus derived from the fine MAP.

### (Addition to Example 2)

In Example 2-1, after performing a hydrothermal treatment at 80°C for 60 minutes as a sludge solubilization treatment for sludge after pH adjustment, only a polymer coagulation agent was added and a dewatering treatment was performed (Example 2-3).

Further, in Example 2-1, sludge after the pH adjustment was diluted by 2.5 folds compared to the subject sludge by using sand filtered water of sewage water treatment as dilution water (Example 2-4).

Operation series and brief conditions for operation were as follows.
Example 2-3: adjusted pH value 5.5 - solubilization treatment (80°C, 60 minutes) - no polyiron
Example 2-4: adjusted pH value 5.5 - 2.5 folds dilution treatment - no polyiron

**[Table 4]**

| Item (operation condition) | Example 2-3 (sludge solubilization; 80°C for 60 minutes) (no polyiron) (pH adjustment: 5.5) | Example 2-4 (2.5 fold dilution treatment) (no polyiron) (pH adjustment: 5.5) |
|---|---|---|
| MAP recovery amount per 1 L sludge | 4.02 g/l L Sludge | 3.62 g/l L Sludge |
| Chemical cost per kg of recovered MAP: (Mg(OH)₂) | 5.6 Yen/kg-MAP | 7.6 Yen/kg-MAP |
| Chemical cost per kg of recovered MAP: (H₂SO₄) | 6.5 Yen/kg-MAP | 7.2 Yen/kg-MAP |
| Total chemical cost | 12.1 Yen/kg-MAP | 14.8 Yen/kg-MAP |
| Water content in dewatered cake | 77.8% | 78.1% |

As a result, in Example 2-3, the MAP recovery amount per 1 L sludge was 4.02 g/1 L sludge, indicating that it is about 20% higher in Example 2-1. That is because, as a part of the organic matters present in sludge is eluted by the solubilization treatment, the MAP constituting components in dewatered filtrate increases and the amount of MAP recovered by the MAP treatment step has increased.

In Example 2-4, the MAP recovery amount per 1 L sludge was 3.61 g/1 L sludge, indicating that it is about 10% higher than Example 2-1. That is because, as the MAP constituting components such as phosphate ions that are present in moisture, which corresponds to about 80% of the weight of the dewatered cake, are diluted by the dilution treatment so that the phosphorus discharge amount to be extracted as a dewatered cake to an outside of a system is reduced and the total amount of the MAP constituting components in the dewatered filtrate increases as much as the reduced amount, yielding increased MAP amount recovered by the MAP treatment step.

Next, descriptions are made regarding the chemical cost.

Chemicals required for the MAP reaction include Mg source, Mg(OH)₂ as an alkalifying agent, and H₂SO₄ as a pH adjusting agent. It was 16.9 Yen/kg-MAP for Example 2-1, which is almost the same as 17.5 Yen/kg-MAP of Comparative example 2-1.

In terms of detailed cost, in Example 2-1, Mg(OH)₂ cost decreased while H₂SO₄ cost increased such as Example 1 but it is considered that both costs almost canceled each other.

It was 11.2 Yen/kg-MAP for Example 2-2, exhibiting about 20% decrease compared to 13.1 Yen/kg-MAP of Comparative Example 2-2.

It is believed that, as the MAP depleted sludge of Example 2 is sludge with pH of at least 8.0, the pH is not significantly lowered even when polyiron is added at addition ratio of 1.5% in Comparative Example 2-2, and thus the effect of Mg source in the returned dewatered filtrate or the pH adjusting agent was insignificant.

It was 12.1 Yen/kg-MAP for Example 2-3, exhibiting about 20% decrease compared to Comparative Example 2-1. It is believed that, as magnesium ions or the like are eluted by sludge solubilization in addition to phosphate ions, the magnesium hydroxide added to the MAP treatment step is somewhat compensated to lower the cost.

It was 14.8 Yen/kg-MAP for Example 2-4, exhibiting about 10% decrease compared to Example 2-1. Although it was possible to recover three MAP constituting components which have been removed, as moisture in dewatered cake, from the system due to sludge dilution effect, each ion concentration was lowered as a result of the dilution, and thus a slight deterioration in the recovery efficiency may be caused.

Next, the dewatering property will be described.

In Example 2-1 not using polyiron in the sludge dewatering step, the cake water content is 0.6 point lower than Comparative Example 2-1, and in Example 2-2 using polyiron, the cake water content is 3.4 points lower than Comparative Example 2-2. Regarding the reason why the cake water content is significantly better in Example 2-2 than Comparative Example, it is believed that, in Comparative Example 2-2, lots of the added polyiron components dissolve a part of the fine MAP component remaining in the sludge and they are also consumed to produce iron phosphate, and thus they do not function to improve the dewatering property of sludge.

In Example 2-3, it was 77.8%, which is 1.6 points lower than Example 2-1. It is believed that the dewatering property is improved by having higher ratio of inorganic matters in the sludge in accordance with the sludge solubilization. Further, it was 78.1% in Example 2-4, which is 1.3 points lower than Example 2-1. It is believed that, as there is a sludge cleaning effect due to the sludge dilution, colloidal components in the sludge as a cause of lowering the dewatering property are removed.

From the above results, it was found that, as a process for exhibiting a phosphorus recovery with high recovery ratio at low cost and dewatering property with high efficiency according to the "sludge type MAP mode", the method described in Example 2-2 is most favorable.

### Explanations of Numerals

1 ... Anaerobic treatment step
2 ... Phosphorus separation step, 2a ... MAP separation step, 2a1 ... MAP depleted sludge, 2a2 ... MAP concentrated slurry, 2b ... MAP treatment step, 2b1 ... MAP treated sludge, 2b2 ... Mg source, pH adjusting agent, or the like, 2c ... MAP recovery step, 2c1 ... Recovered phosphorus,
3 ... Sludge amount reduction step, 3a ... Concentration step, 3a1 ... Concentrated sludge, 3a2 ... Separation water, 3b ... Dewatering step, 3b1 ... Dewatered cake, 3b2 ... Dewatered filtrate,
A ... pH Adjustment step, A1, A11 ... pH-Adjusted sludge,
4 ... Anaerobically treated sludge, 5 ... Polymer coagulation agent, 6 ... Inorganic coagulation agent.

## Claims

1. A method for treating organic waste water or organic sludge, the method comprising:
a phosphorus separation step (2), comprising:
using MAP particles contained in a first medium, which comprises at least anaerobically treated sludge (4) obtained by anaerobically treating organic waste water or organic sludge, as seed crystals for growing the MAP particles by crystallizing and precipitating a phosphorus component dissolved in the first medium,
wherein at least a portion of the MAP particles, which are used as seed crystals, are contained in the anaerobically treated sludge (4), and
separating first medium into grown MAP particles and a MAP depleted sludge (2a1),
a pH adjustment step (A), in which the pH of the MAP depleted sludge (2a1)obtained by the above separation is adjusted to 3.5 to 6.8 to dissolve the MAP particles remaining in the MAP depleted sludge (2a1), thereby obtaining pH-adjusted sludge,
a sludge amount reduction step (3), in which a dewatered cake (3b1) and solid-liquid separation water (3a2) is obtained by concentrating or dewatering the pH-adjusted sludge (A1; A11), and
returning a part or the whole of solid-liquid separation water (3a2) obtained by the concentration or dewatering and having a dissolved phosphorus component to the first medium in the phosphorus separation step (2).

2. The method of claim 1,
wherein in the sludge amount reduction step (3) the MAP depleted sludge (2a1) is concentrated before the pH adjustment step in which the pH of the thus obtained concentrated sludge is adjusted to 3.5 to 6.8 to dissolve the MAP particles remaining in the concentrated sludge, to thereby obtain pH-adjusted sludge (All).

3. The method according to claim 1, wherein the step of separating first medium into grown MAP particles and a MAP depleted sludge (2a1) comprises:
separating first medium into a MAP concentrated slurry (2a2) and the MAP depleted sludge (2a1), and
recovering grown MAP particles from a part of the MAP concentrated slurry (2a2),
the method further comprising:
returning the other part of the MAP concentrated slurry (2a2) to the first medium in the phosphorus separation step (2), such that a portion of the MAP particles, which are used as seed crystals, are provided by the MAP concentrated slurry (2a2).

4. The method according to claim 2, wherein the step of separating first medium into grown MAP particles and a MAP depleted sludge (2a1) step comprises:
separating first medium into a MAP concentrated slurry (2a2) and the MAP depleted sludge (2a1), and
recovering grown MAP particles from a part of the MAP concentrated slurry (2a2),
the method further comprising:
returning the other part of the MAP concentrated slurry (2a2) to the first medium used in the phosphorus separation step (2), such that a portion of the MAP particles, which are used as seed crystals, are provided by the MAP concentrated slurry (2a2).

5. The method according to claim 1 or 3, wherein the sludge amount reduction step (3) comprises:
concentrating the pH-adjusted sludge (A1) to obtain concentrated sludge (3a1) and separation water (3a2) as solid-liquid separation water (3ab),
subsequently adding an iron-based or an aluminum-based inorganic coagulation agent to the concentrated sludge (3a1) for dewatering, thereby obtaining the dewatered cake (3b1) and dewatered filtrate (3b2) as solid-liquid separation water (3ab), the method further comprising:
discharging the dewatered cake (3b1), and
returning a part or the whole of the separation water (3a2) and the dewatered filtrate (3b2) as solid-liquid separation water (3ab) to the first medium in the phosphorus separation step (2).

6. The method according to claim 2 or 4, wherein concentrated separation water (3a2) as solid-liquid separation water (3ab) is obtained in the sludge amount reduction step (3), and a dewatered filtrate (3b2) as solid-liquid separation water (3ab) is obtained in the dewatering step, the method further comprising:
discharging the dewatered cake (3b1), and
returning a part or the whole of the separation water (3a2) and the dewatered filtrate (3b2) as solid-liquid separation water (3ab) to the first medium in the phosphorus separation step (2).

7. The method according to any one of claims 1 to 4, wherein, in the anaerobically treated sludge (4) obtained by an anaerobic treatment of organic waste water or organic sludge, a volatile suspended substance is present at 3000 mg/l or more in the sludge (4) and a content of the phosphorus derived from MAP particles of less than 25 µm is present at 5% or more relative to the total phosphorus content in the whole sludge (4).

8. The method according to any one of claims 1 to 7, wherein, for growing the MAP particles in the phosphorus separation step (2), a pH adjustment of the first medium in at least two stages is performed such that pH is adjusted to 6.4 to 7.5 at the first stage and adjusted to 7.2 to 8.4 at the second stage.

9. The method according to any one of claims 1 to 8, wherein a solubilization treatment for converting a part of the organic components present in sludge (4) to soluble components is performed.

10. The method according to any one of claims 1 to 9, wherein after the pH adjustment (A) and before the dewatering step, the method comprises a further dewatering treatment following a step of diluting the MAP depleted sludge (2a1) by adding dilution water thereto.

11. An apparatus for treatment of organic waste water or organic sludge (4) comprising:
an anaerobic treatment chamber (1a) for anaerobic treatment of organic waste water or organic sludge (4),
a phosphorus separation device (2) having a reaction chamber (2b) for receiving a first medium including at least anaerobically treated sludge (4), in which MAP particles can be grown by crystallizing and precipitating, as MAP, a dissolved phosphorus component in the first medium by using MAP particles contained in anaerobically treated sludge (4) as seed crystals, and
a liquid cyclone (2a) for separating first medium into MAP concentrated slurry (2a2) containing the grown MAP particles and MAP depleted sludge (2a1),
a means for pH adjustment arranged downstream of the liquid cyclone and having a pH meter to measure the pH of MAP depleted sludge (2a1) and an acid source, the means for pH adjustment being configured to adjust pH of the MAP depleted sludge (2a1) separated by the liquid cyclone to a range of 3.5 to 6.8, to dissolve the MAP particles remaining in the MAP depleted sludge (2a1),
a concentrating and dewatering device for concentrating and dewatering pH-adjusted sludge (A1; A11), and
a sludge returning pipe for returning solid-liquid separation water (3a2) discharged from the concentrating and dewatering device to the reaction chamber of the phosphorus separation device.

12. The apparatus of claim 11, further comprising:
a concentrating and dewatering device by which the MAP depleted sludge (2a1) separated by the phosphorus separation device is concentrated.

## Patentansprüche

1. Verfahren zur Behandlung von organischem Abwasser oder organischem Schlamm, wobei das Verfahren Folgendes aufweist:
einen Phosphorabtrennungsschritt (2), der Folgendes aufweist:
Verwenden von Magnesium-Ammonium-Phosphat- bzw. MAP-Partikeln, die in einem ersten Medium enthalten sind, welches zumindest anaerob behandelten Schlamm (4) aufweist, der durch anaerobe Behandlung organischen Abwassers oder organischen Schlamms erhalten wird, als Keimkristalle zum Aufwachsen der MAP-Partikel durch Kristallisation und Abscheidung einer Phosphorkomponente, die in dem ersten Medium gelöst ist,
wobei zumindest ein Teil der MAP-Partikel, die als Keimkristalle verwendet werden, in dem anaerob behandelten Schlamm (4) enthalten sind, und
Trennen des ersten Mediums in gewachsene MAP-Partikel und einen MAP-abgereicherten Schlamm (2a1),
einen pH-Anpassungsschritt (A), in dem der pH des MAP-abgereicherten Schlamms (2a1), der durch die obige Trennung erhalten wird, auf 3,5 bis 6,8 angepasst wird, um die MAP-Partikel, die in dem MAP-abgereicherten Schlamm (2a1) verbleiben, zu lösen, wodurch ein pH-angepasster Schlamm erhalten wird,
einen Schlammmengenverringerungsschritt (3), in dem ein entwässerter Kuchen (3b1) und Fest-Flüssig-Trennwasser (3a2) erhalten wird, und zwar durch Konzentration oder Entwässern des pH-angepassten Schlamms (A1; A11), und
Zurückführen eines Teils oder des gesamten Fest-Flüssig-Trennwassers (3a2), das durch die Konzentration oder die Entwässerung erhalten wird und eine gelöste Phosphorkomponente aufweist, zu dem ersten Medium in dem Phosphorabtrennungsschritt (2).

2. Verfahren gemäß Anspruch 1, wobei in dem Schlammmengenverringerungsschritt (3) der MAP-abgereicherte Schlamm (2a1) vor dem pH-Anpassungsschritt, in dem der pH des auf diese Weise erhaltenen, konzentrierten Schlamms konzentriert wird, auf 3,5 bis 6,8 angepasst wird, um die MAP-Partikel, die in dem konzentrierten Schlamm verbleiben, zu lösen, um dadurch einen pH-angepassten Schlamm (A11) zu erhalten.

3. Verfahren gemäß Anspruch 1, wobei der Schritt des Trennens des ersten Mediums in gewachsene MAP-Partikel und einen MAP-abgereicherten Schlamm (2a1) Folgendes aufweist:
Trennen des ersten Mediums in einen MAP-konzentrierten Schlamm (2a2) und den MAP-abgereicherten Schlamm (2a1), und
Rückgewinnen der gewachsenen MAP-Partikel aus einem Teil des MAP-konzentrierten Schlamms (2a2),
wobei das Verfahren ferner Folgendes aufweist:
Zurückführen des anderen Teils des MAP-konzentrierten Schlamms (2a2) zu dem ersten Medium in dem Phosphorabtrennungsschritt (2), so dass ein Teil der MAP-Partikel, die als Keimkristalle verwendet werden, durch den MAP-konzentrierten Schlamm (2a2) vorgesehen werden.

4. Verfahren gemäß Anspruch 2, wobei der Schritt des Trennens des ersten Mediums in gewachsene MAP-Partikel und einen MAP-abgereicherten Schlamm (2a1) Folgendes aufweist:
Trennen des ersten Mediums in einen MAP-konzentrierten Schlamm (2a2) und den MAP-abgereicherten Schlamm (2a1), und
Rückgewinnen der gewachsenen MAP-Partikel aus einem Teil des MAP-konzentrierten Schlamms (2a2),
wobei das Verfahren ferner Folgendes aufweist:
Rückführen des anderen Teils des MAP-konzentrierten Schlamms (2a2) zu dem ersten Medium, das in dem Phosphorabtrennungsschritt (2) verwendet wird, so dass ein Teil der MAP-Partikel, die als Keimkristalle verwendet werden, durch den MAP-konzentrierten Schlamm (2a2) vorgesehen werden.

5. Verfahren gemäß Anspruch 1 oder 3, wobei der Schlammmengenverringerungsschritt (3) Folgendes aufweist:
Konzentrieren des pH-angepassten Schlamms (A1), um einen konzentrierten Schlamm (3a1) und Trennwasser (3a2) als Fest-Flüssig-Trennwasser (3ab) zu erhalten,
nachfolgendes Hinzufügen eines eisenbasierten oder aluminiumbasierten, anorganischen Coagulationsmittels zu dem konzentrierten Schlamm (3a1) zur Entwässerung, wodurch der entwässerte Kuchen (3b1) und das Entwässserungsfiltrat (3b2) als Fest-Flüssig-Trennwasser (3ab) erhalten werden, wobei das Verfahren ferner Folgendes aufweist:
Entladen des entwässerten Kuchens (3b1) und
Zurückführen eines Teils oder des gesamten Trennwassers (3a2) und des entwässerten Filtrats (3b2) als Fest-Flüssig-Trennwasser (3ab) zu dem ersten Medium in dem Phosphorabtrennungsschritt (2).

6. Verfahren gemäß Anspruch 2 oder 4, wobei konzentriertes Trennwasser (3a2) als Fest-Flüssig-Trennwasser (3ab) in dem Schlammmengenverringerungsschritt (3) erhalten wird, und ein entwässertes Filtrat (3b2) als Fest-Flüssig-Trennwasser (3ab) in dem Entwässerungsschritt erhalten wird, wobei das Verfahren ferner Folgendes aufweist:
Entladen des entwässerten Kuchens (3b1), und
Rückführen eines Teils oder des gesamten Trennwassers (3a2) und des entwässerten Filtrats (3b2) als Fest-Flüssig-Trennwasser (3ab) zu dem ersten Medium in dem Phosphorabtrennungsschritt (2).

7. Verfahren gemäß einem der Ansprüche 1 bis 4, wobei in dem anaerob behandelten Schlamm (4), der durch eine anaerobe Behandlung organischen Abwassers oder organischen Schlamms erhalten wird, eine flüchtig bzw. volatil suspergierte Substanz mit 3.000 mg/l oder mehr in dem Schlamm (4) vorhanden ist und ein Inhalt des Phosphors, der aus den MAP-Partikeln von weniger als weniger als 25 µm abgeleitet ist, mit 5% oder mehr relativ zu dem Gesamtphosphorgehalt in dem gesamten Schlamm (4) vorhanden ist.

8. Verfahren gemäß einem der Ansprüche 1 bis 7, wobei zum Aufwachsen der MAP-Partikel in dem Phosphorabtrennungsschritt (2) eine pH-Anpassung des ersten Mediums in zumindest zwei Stufen ausgeführt wird, so dass der pH auf 6,4 bis 7,5 bei der ersten Stufe angepasst wird und auf 7,2 bis 8,4 bei der zweiten Stufe angepasst wird.

9. Verfahren gemäß einem der Ansprüche 1 bis 8, wobei eine Löslichkeitsbehandlung zur Umwandlung eines Teils der organischen Komponenten, die in dem Schlamm (4) vorhanden sind, an löslichen Komponenten ausgeführt wird.

10. Verfahren gemäß einem der Ansprüche 1 bis 9, wobei nach der pH-Anpassung (A) und vor dem Entwässerungsschritt das Verfahren ferner eine Entwässerungsbehandlung aufweist, die einem Schritt des Verdünnens des MAP-abgereicherten Schlamms (2a1) folgt, und zwar durch Hinzufügen von Verdünnungswasser zu diesem.

11. Vorrichtung zur Behandlung von organischem Abwasser oder organischem Schlamm (4), die Folgendes aufweist:
eine anaerobe Behandlungskammer (1a) zur anaeroben Behandlung von organischem Abwasser oder organischem Schlamm (4),
eine Phosphorabtrennungsvorrichtung (2) mit einer Reaktionskammer (2b) zur Aufnahme eines ersten Mediums, das zumindest anaerob behandelten Schlamm (4) aufweist, in dem MAP-Partikel aufgewachsen werden können durch Kristallisation und Ausfällung, als MAP, einer gelösten Phosphorkomponente in dem ersten Medium durch Verwenden von MAP-Partikeln, die in anaerob behandeltem Schlamm (4) enthalten sind, als Keimkristalle, und
einen Flüssigfliehkraftabscheider (2a) zur Trennung des ersten Mediums in MAP-konzentrierten Schlamm (2a2), der aufgewachsene MAP-Partikel und MAP-abgereicherten Schlamm (2a1) enthält,
ein Mittel zur pH-Anpassung, das nachgelagert zu dem Flüssigfliehkraftabscheider angeordnet ist und einen pH-Messer aufweist, um den pH-Wert des MAP-abgereicherten Schlamms (2a1) und einer Säurequelle zu messen, wobei das Mittel zur pH-Anpassung so konfiguriert ist, dass es den pH des MAP-abgereicherten Schlamms (2a1), der durch den Flüssigfliehkraftabscheider abgeschieden wird, auf einen Bereich von 3,5 bis 6,8 anpasst, um die MAP-Partikel, die in dem MAP-abgereicherten Schlamm (2a1) verbleiben, zu lösen,
eine Konzentrations- und Entwässerungsvorrichtung zur Konzentration und Entwässerung des pH-angepassten Schlamms (A1; A11), und
Schlammrückführungsrohr zur Rückführung des Fest-Flüssig-Trennwassers (3a2), das von der Konzentrations- und Entwässerungsvorrichtung zu der Reaktionskammer der Phosphorabtrennungsvorrichtung abgelassen wird.

12. Vorrichtung gemäß Anspruch 11, die ferner Folgendes aufweist:
eine Konzentrations- und Entwässerungsvorrichtung, durch die der MAP-abgereicherte Schlamm (2a1), der durch die Phosphorabtrennungsvorrichtung abgetrennt wird, konzentriert wird.

## Revendications

1. Procédé pour traiter des eaux usées organiques ou des boues organiques, le procédé comprenant :
une étape de séparation de phosphore (2), comprenant :
utiliser des particules de MAP contenues dans un premier milieu, qui comprend au moins de la boue traitée de façon anaérobie (4) obtenue en traitant de façon anaérobie des eaux usées organiques ou de la boue organique, comme cristaux germes pour faire croître les particules de MAP par cristallisation et par précipitation d'un composant phosphoreux dissous dans le premier milieu,
dans lequel au moins une portion des particules de MAP, particules qui sont utilisées comme cristaux germes, est contenue dans la boue traitée de façon anaérobie (4), et
séparer le premier milieu en particules de MAP de croissance et en boue appauvrie en MAP (2a1),
une étape d'ajustement de pH (A), dans laquelle le pH de la boue appauvrie en MAP (2a1) obtenue par la séparation susmentionnée est ajusté entre 3,5 et 6,8 pour dissoudre les particules de MAP restantes dans la boue appauvrie en MAP (2a1), pour obtenir ainsi de la boue à pH ajusté,
une étape de réduction de quantité de boue (3), dans laquelle un cake déshydraté (3b1) et de l'eau de séparation solide-liquide (3a2) sont obtenus par concentration et déshydratation la boue à pH ajusté (A1 ; A11), et
renvoyer une partie ou la totalité de l'eau de séparation solide-liquide (3a2) obtenue par la concentration ou la déshydratation et comportant un composant phosphoreux dissous, dans le premier milieu dans l'étape de séparation de phosphore (2).

2. Procédé selon la revendication 1, dans lequel dans l'étape de réduction de quantité de boue (3), la boue appauvrie en MAP (2a1) est concentrée avant l'étape d'ajustement de pH dans laquelle le pH de la boue concentrée ainsi obtenue est ajusté entre 3,5 et 6,8 pour dissoudre les particules de MAP restantes dans la boue concentrée, pour obtenir ainsi de la boue à pH ajusté (A11).

3. Procédé selon la revendication 1, dans lequel l'étape de séparation du premier milieu en particules de MAP de croissance et en boue appauvrie en MAP (2a1) comprend :
séparer le premier milieu en une pâte concentrée en MAP (2a2) et en boue appauvrie en MAP (2a1), et
récupérer des particules de MAP de croissance à partir d'une partie de la pâte concentrée en MAP (2a2),
le procédé comprenant en outre :
renvoyer l'autre partie de la pâte concentrée en MAP (2a2) dans le premier milieu dans l'étape de séparation de phosphore (2), de sorte qu'une portion des particules de MAP, particules qui sont utilisées comme cristaux germes, est fournie par la pâte concentrée en MAP (2a2).

4. Procédé selon la revendication 2, dans lequel l'étape de séparation du premier milieu en particules de MAP de croissance et en boue appauvrie en MAP (2a1) comprend :
séparer le premier milieu en une pâte concentrée en MAP (2a2) et en la boue appauvrie en MAP (2a1), et
récupérer des particules de MAP de croissance à partir d'une partie de la pâte.concentrée en MAP (2a2),
le procédé comprenant en outre :
renvoyer l'autre partie de la pâte concentrée en MAP (2a2) vers le premier milieu utilisé dans l'étape de séparation de phosphore (2), de sorte qu'une portion des particules de MAP, particules qui sont utilisées comme cristaux germes, est fournie par la pâte concentrée en MAP (2a2).

5. Procédé selon la revendication 1 ou 3, dans lequel l'étape de réduction de quantité de boue (3) comprend :
concentrer la boue à pH ajusté (A1) pour obtenir de la boue concentrée (3a1) et de l'eau de séparation (3a2) en tant qu'eau de séparation solide-liquide (3ab),
ajouter ensuite un agent de coagulation non organique à base de fer ou à base d'aluminium à la boue concentrée (3a1) pour sa déshydratation, pour obtenir ainsi le cake déshydraté (3b1) et un filtrat déshydraté (3b2) en tant qu'eau de séparation solide-liquide (3ab), le procédé comprenant en outre
évacuer le cake déshydraté (3b1), et
renvoyer une partie ou la totalité de l'eau de séparation (3a2) et du filtrat déshydraté (3b2) en tant qu'eau de séparation solide-liquide (3ab) vers le premier milieu dans l'étape de séparation de phosphore (2).

6. Procédé selon la revendication 2 ou 4, dans lequel de l'eau de séparation concentrée (3a2) en tant qu'eau de séparation solide-liquide (3ab) est obtenue dans l'étape de réduction de quantité de boue (3), et un filtrat déshydraté (3b2) en tant qu'eau de séparation solide-liquide (3ab) est obtenu dans l'étape de déshydratation, le procédé comprenant en outre :
évacuer le cake déshydraté (3b1), et
envoyer une partie ou la totalité de l'eau de séparation (3a2) et du filtrat déshydraté (3b2) en tant qu'eau de séparation solide-liquide (3ab) vers le premier milieu dans l'étape de séparation de phosphore (2).

7. Procédé selon l'une quelconque des revendications 1 à 4, dans lequel, dans la boue traitée de façon anaérobie (4) par un traitement anaérobie d'eaux usées organiques ou de boue organique, une substance en suspension volatile est présente à 3000 mg/litre ou plus dans la boue (4) et la teneur en phosphore dérivée de particules de MAP de moins de 25 *µ*m est de 5 % ou plus par rapport à la teneur totale en phosphore dans la totalité de la boue (4).

8. Procédé selon l'une quelconque des revendications 1 à 7, dans lequel, pour faire croître les particules de MAP dans l'étape de séparation de phosphore (2), un ajustement de pH du premier milieu est réalisé en au moins deux étapes, de telle sorte que le pH est ajusté entre 6,4 et 7,5 dans la première étape et ajusté entre 7,2 et 8,4 dans la deuxième étape.

9. Procédé selon l'une quelconque des revendications 1 à 8, dans lequel est réalisé un traitement de solubilisation destiné à convertir une partie des composants organiques présents dans la boue (4) en composants solubles.

10. Procédé selon l'une quelconque des revendications 1 à 9, dans lequel après l'ajustement de pH (A) et avant l'étape de déshydratation, le procédé comprend un autre traitement de déshydratation à la suite d'une étape de dilution de la boue appauvrie en MAP (2a1) par ajout d'eau de dilution.

11. Dispositif pour le traitement d'eaux usées organiques ou de boues organiques (4), comprenant :
une chambre de traitement anaérobie (1a) pour un traitement anaérobie d'eaux usées organiques ou de boue organique (4),
un dispositif de séparation de phosphore (2) comportant
une chambre de réaction (2b) destinée à recevoir un premier milieu comprenant au moins de la boue traitée de façon anaérobie (4), dans laquelle on peut faire croître des particules de MAP par cristallisation et précipitation, en tant que MAP, d'un composant phosphoreux dissous dans le premier milieu en utilisant des particules de MAP contenue dans de la boue traitée de façon anaérobie (4) comme cristaux germes, et
un cyclone liquide (2a) pour séparer le premier milieu en une pâte concentrée en MAP (2a2) contenant les particules de MAP de croissance et de la boue appauvrie en MAP (2a1),
des moyens d'ajustement de pH agencés en aval du cyclone liquide et comportant un dispositif de mesure de pH pour mesurer le pH de la boue appauvrie en MAP (2a1) et une source acide, les moyens d'ajustement de pH étant agencés pour ajuster le pH de la boue appauvrie en MAP (2a1) séparée par le cyclone liquide dans une plage comprise entre 3,5 et 6,8, pour dissoudre les particules de MAP restantes dans la boue appauvrie en MAP (2a1),
un dispositif de concentration et de déshydratation pour concentrer et déshydrater la boue à pH ajusté (A1 ; A11), et
un tuyau de renvoi de boue pour renvoyer de l'eau de séparation solide-liquide (3a2) évacuée du dispositif de concentration et de déshydratation vers la chambre de réaction du dispositif de séparation de phosphore.

12. Dispositif selon la revendication 11, comprenant en outre :
un dispositif de concentration et de déshydratation par lequel est concentrée la boue appauvrie en MAP (2a1) séparée par le dispositif de séparation de phosphore.
